# EUROPEAN PATENT SPECIFICATION

(11) **EP 3 293 924 B1**
(45) Date of publication and mention of the grant of the patent: **22.11.2023**
(21) Application number: 16789240.5
(22) Date of filing: 06.04.2016
(51) Int. Cl.: H04L 51/18, H04L 51/212, H04L 51/42, H04L 51/214, H04L 51/234

(54) **MESSAGE PROCESSING METHOD AND DEVICE**
NACHRICHTENVERARBEITUNGSVERFAHREN UND -VORRICHTUNG
PROCÉDÉ ET DISPOSITIF DE TRAITEMENT DE MESSAGE

(30) Priority: 04.05.2015 CN 201510221318
(43) Date of publication of application: 14.03.2018
(73) Proprietor: Alibaba Group Holding Limited, Grand Cayman (KY)
(72) Inventor: AN, Qing, Hangzhou Zhejiang 311121 (CN); PENG, Juntao, Hangzhou Zhejiang 311121 (CN); LIU, Dapeng, Hangzhou Zhejiang 311121 (CN)
(74) Representative: Boult Wade Tennant LLP
(86) International application number: PCT/CN2016/078601
(87) International publication number: WO 2016/177246

(56) References cited:
- EP-A1- 2 362 592
- WO-A1-00/17768
- CN-A- 1 675 631
- CN-A- 101 384 009
- CN-A- 102 045 267
- US-A- 5 958 005
- US-A1- 2003 131 060
- US-A1- 2007 190 978
- US-A1- 2014 298 313

## Description

### CROSS-REFERENCE TO RELATED APPLICATIONS

This application claims priority to Chinese Patent Application No. 201510221318.7, filed on May 4, 2015, and entitled "Message Processing Method and Device," and PCT Application No. PCT/CN2016/078601, titled "Message Processing Method and Device" filed on April 6, 2016.

### BACKGROUND

### Technical Field

The disclosure relates to the field of communications, and in particular, to a secure message processing method and device.

### Description of the Related Art

With the development of the Internet, interactive communication (for example, instant communication) between different clients has been widely used. Therefore, ensuring the security of a message during communication has become a focus of attention.

As compared with the sender of a message, the receiver of the message is more susceptible to attack. For example, user terminals are more susceptible to attack than servers of e-commerce platforms due to the enormous amount of user terminals which are difficult to centralize or control. Ensuring the security of the message at the receiver thus becomes very crucial.

As a result, reducing the risk that a private message might be unnecessarily or maliciously retained at the receiver has become an urgent problem to be solved.

EP2362592 discloses a system and method for automatically deleting messages such as e-mail upon consumption by the recipient.

### BRIEF SUMMARY

The disclosure provides a message processing method and device, aimed at solving the problem of how to reduce the risk that private information might be retained by a receiver during communication.

To achieve the previous object, the disclosure provides the following technical solutions.

The invention is disclosed according to independent claims 1, 4, 14 and 15.

In accordance with claim 4, there is described a method performed by a sender, the method comprising: transmitting, by the sender, a first message to a receiver device, the first message being for receipt and display by the receiver device, and being identified by a first message identifier; characterized in that the first message is transmitted in a read-only mode, the read-only mode being a mode in which the message may only be displayed without being stored or modified, and in that the method comprises: clearing, by the sender, the content of the first message; and transmitting, by the sender, a second message to the receiver device, the second message being for receipt by the receiver device and being identified by a second message identifier and comprising null content, wherein the first message identifier is the same as the second message identifier to thereby cause the receiver device to display, as an update, the null content of the second message in place of the content of the first message.

Optionally, prior to sending, by the sender to the receiver, the message in the read-only mode, the method further comprises: determining, by the sender, whether the message is a message of a preset type; sending, by the sender to the receiver, a message arrival notification comprising at least a message acquisition credential if the message is a message of the preset type; verifying, by the sender, whether the message acquisition credential returned by the receiver is correct; the sending, by the sender to the receiver, the message in the read-only mode comprises: sending, by the sender to the receiver, the message of the preset type in the read-only mode if the sender verifies that the message acquisition credential returned by the receiver is correct.

Optionally, sending, by the sender to the receiver, the message in the read-only mode comprises: encapsulating, by the sender, the message in a carrier of a preset type, wherein the carrier of the preset type is a read-only carrier; and sending the encapsulated message to the receiver.

Optionally, clearing, by the sender, the content of the message comprises: clearing the content of the message after determining, by the sender, that the message is received by all receivers.

Optionally, clearing, by the sender, content of the message comprises: determining, by the sender, that a time window of a preset length corresponding to each receiver ends, wherein a start time of the time window of the preset length corresponding to each receiver is one of a time when the sender sends the message in the read-only mode, or a time when the sender receives a read feedback from each receiver.

Optionally, after clearing, by the sender, content of the message if the sender is a server, the method further comprises: sending, by the sender to a client that sends the message, a read notification which serves as a basis for the client to delete the message stored locally.

In accordance with claim 1, there is described a method performed at a receiver device, the method comprising: receiving, at the receiver device, a first message transmitted from a sender, the first message being identified by a first message identifier; and displaying, at the receiver device, content of the first message; characterized in that the first message is received in a read-only mode, the read-only mode being a mode in which the message may only be displayed without being stored or modified, and in that the method further comprises: receiving, at the receiver device, a second message from the sender in response to the sender clearing the content of the first message, the second message being identified by a second message identifier and comprising null content, wherein the first message identifier is the same as the second message identifier; and displaying, as an update, at the receiver device, the null content of the second message in place of the content of the first message.

Optionally, before receiving, by the receiver, the message, the method further comprises: receiving, by the receiver, a message arrival notification comprising at least a message acquisition credential; and sending, by the receiver to the sender of the message, a message acquisition request comprising the message acquisition credential.

Optionally, the process of determining, by the receiver, that the message is received again comprises: acquiring, by the receiver, an identifier of a received message; and determining that the message is received again if the acquired identifier is already present.

Optionally, updating, by the receiver, displayed content of the message with content of the most recently received message comprises: determining, by the receiver, a display region corresponding to the identifier; and updating, by the receiver, displayed content at the display region with content of the most recently received message.

Optionally, displaying, by the receiver to a user, content of the message comprises: displaying, by the receiver to the user, the content of the message by parsing a carrier that encapsulates the message.

A message processing device, applied to a client or a server, comprises: a first sending module, configured to send to a receiver a message in a read-only mode; a content clearing module, configured to clear content of the message; and a second sending module, configured to send to the receiver the message with null content.

Optionally, the device further comprises: a determining module, configured to, prior to sending, to the receiver, the message in the read-only mode, determine whether the message is a message of a preset type; a third sending module, configured to send to the receiver a message arrival notification comprising at least a message acquisition credential if the message is a message of the preset type; and a verifying module, configured to verify whether the message acquisition credential returned by the receiver is correct; the first sending module being configured to send to a receiver a message in a read-only mode comprises: the first sending module being specifically configured to send to the receiver the message of the preset type in the read-only mode if the verifying module verifies that the message acquisition credential returned by the receiver is correct.

Optionally, the first sending module is further configured to encapsulate the message in a carrier of a preset type, wherein the carrier of the preset type is a read-only carrier; and send to the receiver the encapsulated message.

Optionally, the content clearing module is further configured to clear the content of the message after determining that the message is received by all receivers.

Optionally, the content clearing module is further configured to determine that a time window of a preset length corresponding to each receiver ends, wherein a start time of the time window of the preset length corresponding to each receiver is one of a time when the first sending module sends the message in the read-only mode, or a time when it is determined that a read feedback from each receiver is received.

Optionally, if the device is disposed at a server, the device further comprises: a fourth sending module, configured to, after the content clearing module clears the content of the message, send a read notification to a client that sends the message, the read notification serving as a basis for the client to delete the message stored locally.

In the message processing method and device described herein, a sender sends to a receiver a message in a read-only mode; the receiver displays content of the message in the read-only mode to a user. Because the message is in the read-only mode, the receiver cannot store the message. The sender clears the content of the message and sends the message with null content to the receiver; and the receiver again receives the message and updates displayed content of the message with content of the most recently received message; because the content of the message is already cleared by the sender, the content displayed at the receiver is also empty, thereby achieving the deletion of the message content.

It can be appreciated that through the method and the device described herein, it can be guaranteed that both the message content being deleted at the receiver and the message not being stored by the receiver, thereby reducing the risk that the message content might be retained by the receiver.

### BRIEF DESCRIPTION OF THE DRAWINGS

In order to more clearly illustrate the technical solutions in disclosed embodiments, the drawings used in the description of the embodiments are introduced briefly herein. The drawings described below are merely some embodiments; and those of ordinary skill in the art can also obtain other drawings according to these drawings without making creative efforts.
FIG. 1 is a diagram illustrating a scenario of message transmission between electronic apparatuses according to some embodiments of the disclosure.
FIG. 2 is a flow diagram illustrating a message processing method according to some embodiments of the disclosure.
FIG. 3 is a flow diagram illustrating a message processing method according to some embodiments of the disclosure.
FIG. 4 is a block diagram illustrating a message processing device according to some embodiments of the disclosure.
FIG. 5 is a block diagram illustrating a message processing device according to some embodiments of the disclosure.

### DETAILED DESCRIPTION

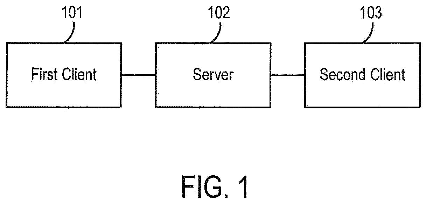

The following detailed description includes a message processing method and device that can be applied to a message transmission scenario (for example, instant communication) between electronic apparatuses. For example, as shown in FIG. 1, a client (e.g., 101) and a server (102) are typically included for instant communication. By using two clients (101, 103) as an example, a message transmitted between a first client (101) and a second client (103) is transmitted to each other via the server (102). In the disclosed embodiments, an apparatus for sending a message is referred to as a sender. For example, in FIG. 1, each of the first client (101), second client (103) or server (102) may be a sender. The destination, or receiving, apparatus of a message is referred to as a receiver. For example, in FIG. 1, the first client (101) and the second client (103) may both be used as the receiver for the message transmitted between the apparatuses.

The technical solutions will be described clearly and completely below with reference to the drawings in the embodiments. The described embodiments are merely some, rather than all, of the embodiments. On the basis of the embodiments, all other embodiments obtained by those of ordinary skill in the art without making creative efforts shall fall within the scope of the disclosure.

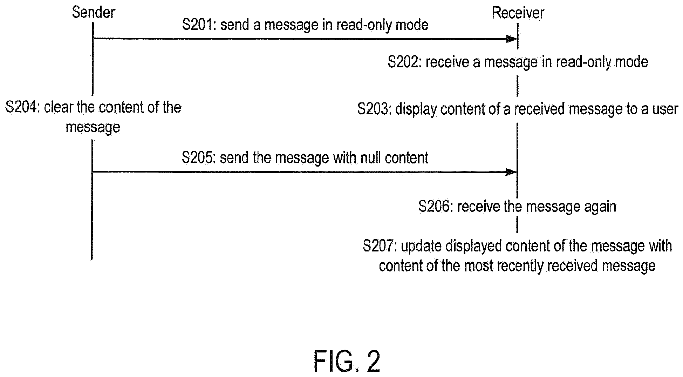

FIG. 2 is a flow diagram illustrating a message processing method according to some embodiments of the disclosure.

S201: send, by a sender to a receiver, a message in read-only mode.

S202: receive, by the receiver, the message in read-only mode.

In one embodiment, a read-only mode refers to the mode in which a message may only be displayed without being stored or modified.

S203: display, by the receiver to a user, content of a received message.

In one embodiment, if the content of the message is a text or a picture, the receiver may display the content of the message to the user. Alternatively, or in conjunction with the foregoing, if the content of the message contains a voice message, the receiver may play the voice message to the user.

S204: clear, by the sender, the content of the message.

S205: send, by the sender to the receiver, the message with null content.

S206: receive, by the receiver, the message again.

In the process of message transmission, it is common that the message carries an identifier corresponding thereto in a one-to-one manner. After receiving the message, the receiver may acquire and store the identifier of the message. If the acquired identifier already exists locally at the receiver, it is determined that the resent message corresponds to a message received earlier, i.e., a message received previously is received again.

S207: update, by the receiver, displayed content of the message with content of the most recently received message.

Specifically, after determining that a message having the same identifier is received again, the receiver determines a display region corresponding to this identifier (generally, one identifier corresponds to one display region and the range of the display region may be determined by coordinates), and the receiver updates displayed content at this display region with the content of the most recently received message.

Since the sender has already cleared the content of the message, the content displayed in the display region is empty after the receiver updates the content of this message.

In the process of instant communication, the sender may send a message to the receiver with content of the message being a bank account. Since the bank account is in read-only mode, the receiver can only display the bank account but cannot perform any other operations like save or copy. The sender clears the content of this message later and again sends this message. After receiving this message again, the receiver updates the displayed content of the message to be empty, thereby achieving the "self-destruct" effect of the bank account.

During the message transmission, the sender sends the message in read-only mode to the receiver. Thus the message then can only be displayed without being saved or operated upon in other manners at the receiver. Therefore, the method prevents the message from being saved by the receiver. Further, after the content of the message is cleared by the sender, the receiver also clears the displayed content of the message. As a result, the receiver may also clear the content of the message after the message is displayed, thereby achieving the self-destruct effect. In sum, the method described in the embodiment can reduce the risk that the content of the message might be unnecessarily or maliciously retained at the receiver.

Further, the method described differs from the existing "self-destruct" technology in that: in the existing "self-destruct" technology, after the message is sent to the receiver, the message is stored locally first before the content of the message is displayed. After the message is read, the receiver deletes the message locally. However, storing the message locally before the message is read may cause leakage of the message. The method described in the embodiment, on the other hand, does not have the leakage risk because the message is not stored locally by the receiver. The risk that the content of the message might be leaked at the receiver can be further reduced in comparison with the existing "self-destruct" technology.

In the case where a server is the sender, the emphasis may be placed on illustrating the processes of generating, sending, and parsing the message in the read-only mode.

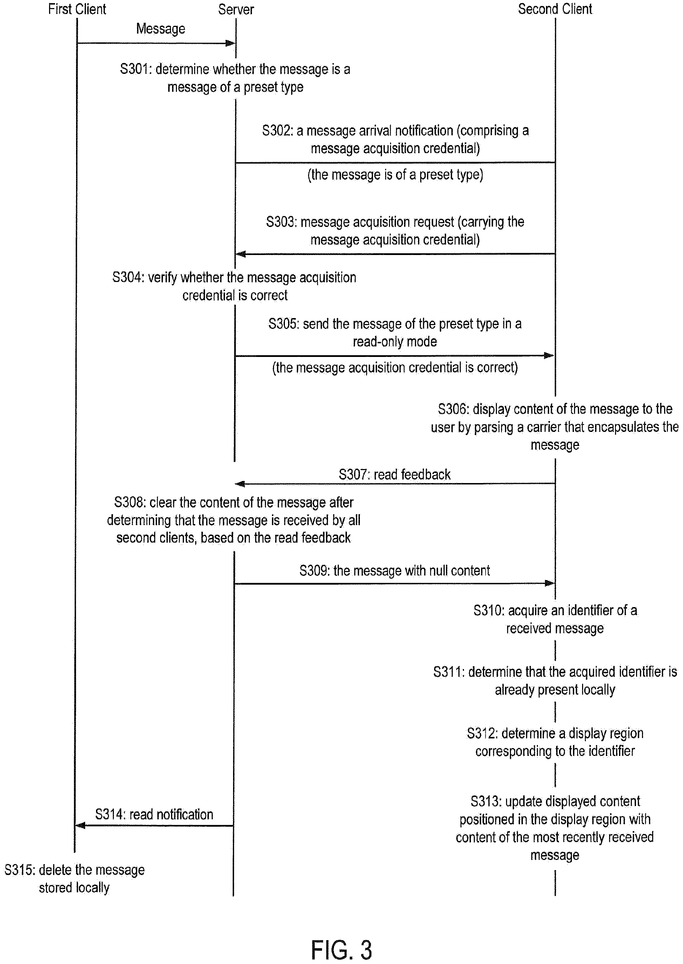

FIG. 3 is a flow diagram illustrating a message processing method according to some embodiments of the disclosure.

S301: determine, by a server, whether the message is a message of a preset type after receiving the message sent by a first client.

The message of the preset type may be set in advance, and the setting may depend, for example, on the content of the message. For example, a message containing personal content (e.g., a bank account) may be set as a message of a preset type. The server may then determine whether a received message is the message of the preset type based on the content of the message.

S302: send, by the server to a second client, a message arrival notification comprising a message acquisition credential if the message is a message of the preset type.

Specifically, the message acquisition credential may be generated by the server by using its own identifier, an identifier of the second client, and random numbers generated locally. In this case, the message arrival notification may comprise the identifier of the server and the identifier of the second client in addition to the message acquisition credential.

When multiple messages are to be acquired via the message acquisition credential, the message arrival notification may further comprise identifiers of messages to distinguish the messages from another.

S303: send, by the second client to the server, a message acquisition request after receiving the message arrival notification, wherein the message acquisition request includes the message acquisition credential.

The second client may use the reception of the message arrival notification as a trigger condition for sending the message acquisition request. That is, after receiving the message arrival notification, the second client automatically sends the message acquisition request to the server. The second client may also use the reception of a user's operation instruction as the trigger condition for sending the message acquisition request. That is, after receiving the message arrival notification, the second client informs the user that a message has arrived. After the user performs an operation (e.g., clicking on a screen) for acquiring the message, the second client again sends the message acquisition request to the server.

If the message arrival notification comprises the identifier of the server, the identifier of the second client, and the identifier of the message, then the message acquisition request sent by the second client may further comprise the identifier of the server, the identifier of the second client, and the identifier of the message.

S304: verify, by the server, whether the message acquisition credential returned by the second client is correct. If the credential is correct, the method continues to step S305. If not, the method sends a notification to the second client indicating that information cannot be verified and the message cannot be acquired (not illustrated).

Specifically, the server may use the identifier of the server sent by the second client, the identifier of the second client, and the local random numbers to generate a new message acquisition credential. The server then compares the new message acquisition credential with the message acquisition credential sent by the second client and determines that the message acquisition credential returned by the second client is correct if the two message acquisition credentials above are identical.

S305: send, by the server to the second client, the message of the preset type in the read-only mode.

Sending, to the second client, the message in the read-only mode may include the server encapsulating the message in a read-only carrier of a preset type (e.g., an HTML read-only file). The server then sends the encapsulated message to the second client.

S306: display, by the second client to the user, the content of the message by parsing the carrier that encapsulates the message.

The second client may display the content of the message on an application interface of the second client by paring the carrier that encapsulates the message. For example, the second client can parse the HTML read-only file, and display content of the HTML read-only file on the interface of the second client.

It should be noted that the content of the HTML read-only file may be displayed on the second client instead of being displayed in a traditional browser.

S307: send, by the second client to the server, read feedback.

S308: clear, by the server, the content of the message after determining that the message is received by all second clients, based on the read feedback.

The first client may send the message to one or more second clients. If multiple second clients exist, the second clients need to determine that the message has been received by all the second clients before clearing the content of the message, avoiding the problem that users of the second clients may not see the content of the message.

The server may determine that the message is already received by the second client may by determining that a time window of a preset length corresponding to each second client ends, wherein a start time of the time window of the preset length corresponding to each second client is the time when the server sends the message in the read-only mode. The preset length may be set in advance according to actual requirements. Alternatively, the server determines that the message is already received by the second client may by receiving read feedback from each second client.

S309: send, by the server to the second client, the message with null content.

S310: acquire, by the second client, an identifier of the received message.

S311: determine, by the second client, whether the acquired identifier already exists locally. If so, the second client determines that the message is received again and performs S312. If not, the second client displays the content of the message to the user (not illustrated);
S312: determine, by the second client, a display region corresponding to the identifier.

S313: update, by the second client, displayed content at the display region with content of the most recently received message.

S314: send, by the server to the first client, a read notification, the read notification being served as a basis for the client to delete the message stored locally.

S315: delete, by the first client, the message stored locally.

In the method described the receiver cannot save a received personal message that is stored in the server. The server is likely to ensure the security than the client and thus having the message stored in the server reduces the risk of a stolen message. In addition, after the client receives the personal message, the server clears the content of the message and then the client also clears the content of the message, ensuring that the private information is not retained at the client of the receiver, thereby achieving the purpose of ensuring that the personal message may not be leaked at the client of the receiver.

In accordance with the method described above, further disclosed is a message processing device which may be applied to the client or the server in FIG. 1.

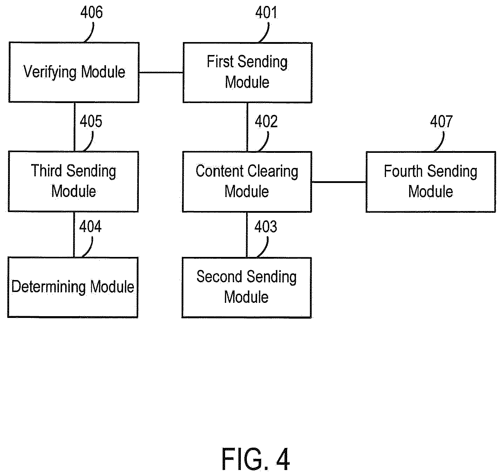

FIG. 4 is a block diagram illustrating a message processing device according to some embodiments of the disclosure.

As shown in FIG. 4, the device described comprises a first sending module 401, a content clearing module 402, and a second sending module 403.

The first sending module 401 is configured to send a message to a receiver in a read-only mode. The first sending module sending the message to the receiver in the read-only mode may be performed as follows: the message is encapsulated in a carrier of a preset type, wherein the carrier of the preset type is a read-only carrier, and the encapsulated message is sent to the receiver.

The content clearing module 402 is configured to clear content of the message. The content clearing module clearing the content of the message may be performed as follows: after determining that the message is received by all receivers, the content of the message is cleared. Further, the operation of the content clearing module determining that the message is received by all receivers may be performed as follows: determining that a time window of a preset length corresponding to each receiver ends, wherein a start time of the time window of the preset length corresponding to each receiver is the time when the first sending module sends the message in the read-only mode; or the time when it is determined that read feedback from each receiver is received.

The second sending module 403 is configured to send the message of which the content is empty to the receiver.

The device may further include the following modules.

The device includes a determining module 404, configured to, prior to the sending the message to the receiver in the read-only mode, determine whether the message is a message of a preset type.

The device includes a third sending module 405, configured to send to the receiver a message arrival notification comprising at least a message acquisition credential if the message is a message of the preset type, wherein the message arrival notification further comprises at least one of the following: an identifier of the sender, an identifier of the receiver, and an identifier of the message.

The device includes a verifying module 406, configured to verify whether a message acquisition credential returned by the receiver is correct, wherein if the device described in the embodiment comprises the above-described modules, a specific implementation for the first sending module 401 to send the message to the receiver in read-only mode may be as follows: if the verifying module verifies that the message acquisition credential returned by the receiver is correct, the message of the preset type is sent to the receiver in read-only mode.

Optionally if the device described in the embodiment is disposed at the server, the device may further comprise a fourth sending module 407, configured to, after the content clearing module clears the content of the message, send a read notification to a client that sends the message, the read notification serving as a basis for the client to delete the message stored locally.

The device described can ensure that the message is not retained by a client of the receiver, thereby improving the security of the message.

Another message processing device described in an embodiment may be applied to the client in FIG. 1.

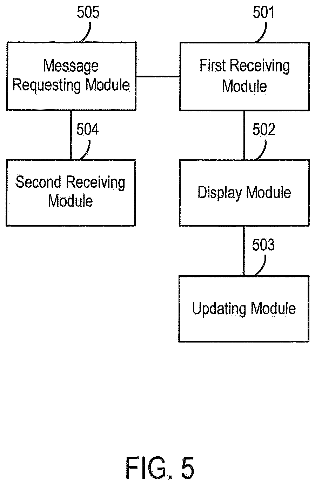

FIG. 5 is a block diagram illustrating a message processing device according to some embodiments of the disclosure.

As shown in FIG. 5, the device described in the embodiment may comprise a first receiving module 501, a display module 502, and an updating module 503;

The first receiving module 501 is configured to receive a message, wherein the message is in a read-only mode.

The display module 502 is configured to display content of the message to the user; the specific implementation for the display module to display the content of the message to the user may be as follows: the content of the message is displayed to the user by parsing a carrier that encapsulates the message.

The updating module 503 is configured to update the displayed content of the message with content of the most recently received message if the message is received again. In one embodiment, determining that the message is received again may be performed as follows: an identifier of a received message is acquired; and if the acquired identifier is already present, it is determined that the message is received again. Further, updating displayed content of the message with content of the most recently received message may be performed as follows: a display region corresponding to the identifier is determined, and displayed content at the display region is updated with the content of the most recently received message.

Optionally, the device described may further comprise a second receiving module 504 and a message requesting module 505.

The second receiving module 504 may be configured to, before receiving the message by the first receiving module, receive a message arrival notification comprising at least a message acquisition credential.

Further, the message requesting module 505 may be configured to send a message acquisition request to the sender of the message, the message acquisition request comprising the message acquisition credential.

The security of the message at the client can be enhanced through the interaction between the device described in this embodiment and the device described in the previous embodiment.

The client described in the embodiment may further comprise the message processing devices described in previous embodiments. In other words, the devices shown in FIG. 4 and FIG. 5 may be integrated into one client. In this case, it is possible to guarantee that the message is not retained at the receiver, no matter whether this client is used as the sender or the receiver of the message. The security of the message is then enhanced.

References to the specific processes of the devices described in FIG. 4 and FIG. 5 can be made by referring to FIG. 2 or FIG. 3. Details thereof are not repeated herein but are incorporated by reference in their entirety.

The method functions, when achieved in the form of software function units and sold or used as an independent product and can be stored in a computing device-accessible storage medium. Based on such understanding, part of the embodiments or part of the technical solutions that make a contribution to the prior art may be embodied in the form of a software product stored in a storage medium, including several instructions used to enable a computing device (which may be a personal computer, a sender, a mobile computing device, or a network device, etc.) to execute all or some steps of the methods of various embodiments. The preceding storage medium can be various media capable of storing program codes, including a USB flash disk, a mobile hard disk, a Read-Only Memory (ROM), a Random Access Memory (RAM), a disk or a compact disk.

## Claims

1. A method performed at a receiver device, the method comprising:
receiving (S202), at the receiver device, a first message transmitted (S201) from a sender, the first message being identified by a first message identifier; and
displaying (S203), at the receiver device, content of the first message;
**characterized in that** the first message is received in a read-only mode, the read-only mode being a mode in which the message may only be displayed without being stored or modified, and **in that** the method further comprises:
receiving (S206), at the receiver device, a second message from the sender (S205) in response to the sender clearing (S204) the content of the first message, the second message being identified by a second message identifier and comprising null content, wherein the first message identifier is the same as the second message identifier; and
displaying (S207), as an update, at the receiver device, the null content of the second message in place of the content of the first message.

2. The method of claim 1, wherein the read-only mode prevents interactions of the receiver device with the first message, the interactions including save and copy interactions.

3. The method of claim 1, wherein displaying the null content of the second message in place of the content of the first message comprises:
determining, by the receiver device, that the second message identifier of the second message is stored locally;
determining, by the receiver device, a display region of the receiver device associated with the second message identifier; and
updating, by the receiver device, displayed content in the display region with the null content.

4. A method performed at a sender, the method comprising:
transmitting (S201), by the sender, a first message to a receiver device, the first message being for receipt (S202) and display (S203) by the receiver device, and being identified by a first message identifier;
**characterized in that** the first message is transmitted in a read-only mode, the read-only mode being a mode in which the message may only be displayed without being stored or modified, and **in that** the method comprises:
clearing (S204), by the sender, the content of the first message; and
transmitting (S205), by the sender, a second message to the receiver device, the second message being for receipt (S206) by the receiver device and being identified by a second message identifier and comprising null content, wherein the first message identifier is the same as the second message identifier to thereby cause the receiver device to display (S207), as an update, the null content of the second message in place of the content of the first message.

5. The method of claim 4, further comprising:
sending, by the sender, a message arrival notification to the receiver device if the first message is of a preset type;
receiving, by the sender, a message acquisition request from the receiver device; and
transmitting, by the sender, the first message to the receiver device in response to receiving the message acquisition request.

6. The method of claim 5, wherein the message acquisition request includes a message acquisition credential and the method further comprises verifying, by the sender, that the message acquisition credential is correct prior to transmitting the first message to a receiver device.

7. The method of claim 4, wherein said transmitting, by the sender, the second message to the receiver device is performed after receiving, by the sender, read feedback from the receiver device.

8. The method of claim 7, further comprising generating, by the sender, the second message in response to the read feedback.

9. The method of claim 4, further comprising receiving, by the sender, the first message from another device.

10. The method of claim 9, further comprising transmitting, by the sender, a read notification to said another device after the null content is displayed at the receiver device.

11. The method of claim 4, wherein the read-only mode prevents interactions of the receiver device with the first message, the interactions including save and copy interactions.

12. The method of claim 4, the transmitting the first message to a receiver device comprising encapsulating, by the sender, the first message in a read-only carrier format prior to transmitting the first message.

13. The method of claim 5, further comprising:
initializing, by the sender, a time window after transmitting the first message to a receiver device;
determining, by the sender, that the time window has expired; and
transmitting, by the sender, the second message to the receiver device after determining that the time window expires.

14. A computer-readable medium having stored thereon a plurality of instructions, the plurality of instructions including instructions which, when executed by a processor, cause the processor to perform the method according to any one of the preceding claims.

15. An apparatus adapted to carry out the method according to any one of claims 1 to 13.

## Patentansprüche

1. Verfahren, das an einer Empfängervorrichtung ausgeführt wird, das Verfahren umfassend:
Empfang (S202), an der Empfängervorrichtung, einer ersten Nachricht, die von einem Sender übermittelt wird (S201), wobei die erste Nachricht durch eine erste Nachrichtenkennung identifiziert wird; und
Anzeige (S203), an der Empfängervorrichtung, eines Inhalts der ersten Nachricht;
**dadurch gekennzeichnet, dass** die erste Nachricht in einem Schreibschutzmodus empfangen wird, wobei es sich bei dem Schreibschutzmodus um einen Modus handelt, bei dem die Nachricht nur angezeigt werden kann, ohne dass sie gespeichert oder geändert wird, und dass das Verfahren weiter umfasst:
Empfang (S206), an der Empfängervorrichtung, einer zweiten von dem Sender übermittelten (S205) Nachricht ansprechend darauf, dass der Sender den Inhalt der ersten Nachricht löscht (S204), wobei die zweite Nachricht durch eine zweite Nachrichtenkennung identifiziert wird und null Inhalt enthält, wobei die erste Nachrichtenkennung dieselbe ist wie die zweite Nachrichtenkennung; und
Anzeige (S207), als eine Aktualisierung, an der Empfängervorrichtung, des null Inhalts der zweiten Nachricht anstelle des Inhalts der ersten Nachricht.

2. Verfahren nach Anspruch 1, wobei der Schreibschutzmodus Interaktionen der Empfängervorrichtung bei der ersten Nachricht verhindert, wobei die Interaktionen Speicher- und Kopierinteraktionen einschließen.

3. Verfahren nach Anspruch 1, wobei die Anzeige des null Inhalts der zweiten Nachricht anstelle des Inhalts der ersten Nachricht umfasst:
Bestimmung, durch die Empfängervorrichtung, dass die zweite Nachrichtenkennung der zweiten Nachricht lokal gespeichert wird;
Bestimmung, durch die Empfängervorrichtung, eines Anzeigebereichs der Empfängervorrichtung, der mit der zweiten Nachrichtenkennung assoziiert wird; und
Aktualisierung, durch die Empfängervorrichtung, eines angezeigten Inhalts in dem Anzeigebereich mit dem null Inhalt.

4. Verfahren, das auf einer Senderseite durchgeführt wird, das Verfahren umfassend:
Übermittlung (S201), durch den Sender, einer ersten Nachricht an eine Empfängervorrichtung, wobei die erste Nachricht zum Empfang (S202) und zur Anzeige (S203) durch die Empfängervorrichtung ausgelegt ist und durch eine erste Nachrichtenkennung identifiziert wird;
**dadurch gekennzeichnet, dass** die erste Nachricht in einem Schreibschutzmodus übermittelt wird, wobei es sich bei dem Schreibschutzmodus um einen Modus handelt, bei dem eine Nachricht nur angezeigt werden kann, ohne dass sie gespeichert oder geändert wird, und dass das Verfahren umfasst:
Löschen (S204), durch den Sender, des Inhalts der ersten Nachricht; und
Übermittlung (S205), durch den Sender, einer zweiten Nachricht an die Empfängervorrichtung, wobei die zweite Nachricht zum Empfang (S206) durch die Empfängervorrichtung ausgelegt ist und durch eine zweite Nachrichtenkennung identifiziert wird und null Inhalt enthält, wobei die erste Nachrichtenkennung dieselbe ist wie die zweite Nachrichtenkennung, um dadurch die Empfängervorrichtung zu veranlassen, als eine Aktualisierung, den null Inhalt der zweiten Nachricht anstelle des Inhalts der ersten Nachricht anzuzeigen (S207).

5. Verfahren nach Anspruch 4, weiter umfassend:
Senden, durch den Sender, einer Nachrichten-Ankunftsbenachrichtigung an die Empfängervorrichtung, falls die erste Nachricht von einer voreingestellten Sorte ist;
Empfang, durch den Sender, einer Nachrichten-Beschaffungsanfrage von der Empfängervorrichtung; und
Übermittlung, durch den Sender, der ersten Nachricht an die Empfängervorrichtung ansprechend auf den Empfang der Nachrichten-Beschaffungsanfrage.

6. Verfahren nach Anspruch 5, wobei die Nachrichten-Beschaffungsanfrage einen Nachrichtenbeschaffungs-Berechtigungsnachweis enthält und das Verfahren weiter die Überprüfung, durch den Sender, umfasst, dass der Nachrichtenbeschaffungs-Berechtigungsnachweis korrekt ist, bevor die erste Nachricht an eine Empfängervorrichtung übermittelt wird.

7. Verfahren nach Anspruch 4, wobei die Übermittlung, von dem Sender, der zweiten Nachricht an die Empfängervorrichtung durchgeführt wird, nachdem ein Lese-Feedback von der Empfängervorrichtung, durch den Sender, empfangen wird.

8. Verfahren nach Anspruch 7, das weiter die Erzeugung, durch den Sender, der zweiten Nachricht ansprechend auf das Lese-Feedback umfasst.

9. Verfahren nach Anspruch 4, das weiter dem Empfang, durch den Sender, der ersten Nachricht von einer anderen Vorrichtung umfasst.

10. Verfahren nach Anspruch 9, das weiter die Übermittlung, durch den Sender, einer Lesebenachrichtigung an diese andere Vorrichtung umfasst, nachdem der null Inhalt an der Empfängervorrichtung angezeigt wird.

11. Verfahren nach Anspruch 4, wobei der Schreibschutzmodus Interaktionen der Empfängervorrichtung bei der ersten Nachricht verhindert, wobei die Interaktionen Speicher- und Kopierinteraktionen einschließen.

12. Verfahren nach Anspruch 4, wobei die Übermittlung der ersten Nachricht an eine Empfängervorrichtung die Kapselung, durch den Sender, der ersten Nachricht in ein schreibgeschütztes Trägerformat umfasst, bevor die erste Nachricht übermittelt wird.

13. Verfahren nach Anspruch 5, weiter umfassend:
Initialisierung, durch den Sender, eines Zeitfensters, nachdem die erste Nachricht an eine Empfängervorrichtung übermittelt wird;
Bestimmung, durch den Sender, dass das Zeitfenster abgelaufen ist; und
Übermittlung, durch den Sender, der zweiten Nachricht an die Empfängervorrichtung, nachdem bestimmt wird, dass das Zeitfenster endet.

14. Computerlesbarer Datenträger, auf dem eine Vielzahl von Befehlen gespeichert ist, wobei die Vielzahl von Befehlen Befehle umfasst, die bei Ausführung durch einen Prozessor den Prozessor veranlassen, das Verfahren nach einem der vorhergehenden Ansprüche auszuführen.

15. Vorrichtung, die zur Ausführung des Verfahrens nach einem der Ansprüche 1 bis 13 geeignet ist.

## Revendications

1. Procédé mis en oeuvre au niveau d'un dispositif récepteur, le procédé comprenant les étapes consistant à :
recevoir (S202), au niveau du dispositif récepteur, un premier message transmis (S201) par un expéditeur, le premier message étant identifié par un premier identifiant de message ; et
afficher (S203), au niveau du dispositif récepteur, le contenu du premier message ;
**caractérisé en ce que** le premier message est reçu en mode de lecture seule, le mode de lecture seule étant un mode dans lequel le message peut être affiché uniquement sans être stocké ou modifié, et **en ce que** le procédé comprend en outre les étapes consistant à :
recevoir (S206), au niveau du dispositif récepteur, un second message provenant de l'expéditeur (S205) en réponse à l'expéditeur effaçant (5204) le contenu du premier message, le second message étant identifié par un second identifiant de message et comprenant un contenu nul, dans lequel le premier identifiant de message est le même que le second identifiant de message ; et
afficher (S207), en tant que mise à jour, au niveau du dispositif récepteur, le contenu nul du second message à la place du contenu du premier message.

2. Procédé selon la revendication 1, dans lequel le mode de lecture seule empêche des interactions du dispositif récepteur avec le premier message, les interactions incluant des interactions de sauvegarde et de copie.

3. Procédé selon la revendication 1, dans lequel l'affichage du contenu nul du second message à la place du contenu du premier message comprend les étapes consistant à :
déterminer, par l'intermédiaire du dispositif récepteur, que le second identifiant de message du second message est stocké localement ;
déterminer, par l'intermédiaire du dispositif récepteur, une région d'affichage du dispositif récepteur associée au second identifiant de message ; et
mettre à jour, par l'intermédiaire du dispositif récepteur, le contenu affiché dans la région d'affichage avec le contenu nul.

4. Procédé mis en oeuvre chez un expéditeur, le procédé comprenant l'étape consistant à :
transmettre (S201), par l'intermédiaire de l'expéditeur, un premier message à un dispositif récepteur, le premier message étant destiné à être reçu (S202) et affiché (S203) par le dispositif récepteur, et étant identifié par un premier identifiant de message ;
**caractérisé en ce que** le premier message est transmis en mode de lecture seule, le mode de lecture seule étant un mode dans lequel le message peut être affiché uniquement sans être stocké ou modifié, et **en ce que** le procédé comprend les étapes consistant à :
effacer (S204), par l'intermédiaire de l'expéditeur, le contenu du premier message ; et
transmettre (S205), par l'intermédiaire de l'expéditeur, un second message au dispositif récepteur, le second message étant destiné à être reçu (S206) par le dispositif récepteur et étant identifié par un second identifiant de message et comprenant un contenu nul, dans lequel le premier identifiant de message est le même que le second identifiant de message pour amener ainsi le dispositif récepteur à afficher (S207), en tant que mise à jour, le contenu nul du second message à la place du contenu du premier message.

5. Procédé selon la revendication 4, comprenant en outre les étapes consistant à :
envoyer, par l'intermédiaire de l'émetteur, une notification d'arrivée de message au dispositif récepteur si le premier message est d'un type prédéfini ;
recevoir, par l'expéditeur, une demande d'acquisition de message à partir du dispositif récepteur ; et
transmettre, par l'intermédiaire de l'expéditeur, le premier message au dispositif récepteur en réponse à la réception de la demande d'acquisition de message.

6. Procédé selon la revendication 5, dans lequel la demande d'acquisition de message inclut un justificatif d'identité d'acquisition de message et le procédé comprend en outre la vérification, par l'expéditeur, que le justificatif d'identité d'acquisition de message est correct avant de transmettre le premier message à un dispositif récepteur.

7. Procédé selon la revendication 4, dans lequel ladite transmission, par l'expéditeur, du second message au dispositif récepteur est effectuée après réception, par l'expéditeur, d'une rétroaction de lecture à partir du dispositif récepteur.

8. Procédé selon la revendication 7, comprenant en outre l'étape consistant à générer, par l'expéditeur, le second message en réponse à la rétroaction de lecture.

9. Procédé selon la revendication 4, comprenant en outre la réception, par l'expéditeur, du premier message en provenance d'un autre dispositif.

10. Procédé selon la revendication 9, comprenant en outre la transmission, par l'expéditeur, d'une notification de lecture audit autre dispositif après l'affichage du contenu nul au niveau du dispositif récepteur.

11. Procédé selon la revendication 4, dans lequel le mode de lecture seule empêche des interactions du dispositif récepteur avec le premier message, les interactions incluant des interactions de sauvegarde et de copie.

12. Procédé selon la revendication 4, la transmission du premier message à un dispositif récepteur comprenant l'encapsulation, par l'expéditeur, du premier message dans un format de porteuse en lecture seule avant la transmission du premier message.

13. Procédé selon la revendication 5, comprenant en outre les étapes consistant à :
initialiser, par l'intermédiaire de l'expéditeur, une fenêtre temporelle après avoir transmis le premier message à un dispositif récepteur ;
déterminer, par l'intermédiaire de l'expéditeur, que la fenêtre temporelle a expiré ; et
transmettre, par l'intermédiaire de l'expéditeur, le second message au dispositif récepteur après avoir déterminé que la fenêtre temporelle expire.

14. Support lisible par ordinateur sur lequel est stockée une pluralité d'instructions, la pluralité d'instructions incluant des instructions qui, lorsqu'elles sont exécutées par un processeur, amènent le processeur à mettre en oeuvre le procédé selon l'une quelconque des revendications précédentes.

15. Appareil adapté pour mettre en oeuvre le procédé selon l'une quelconque des revendications 1 à 13.
